Europäisches Patentamt

**European Patent Office**

**Office européen des brevets**

(19)

(11) Veröffentlichungsnummer: **0 095 040**
**B1**

(12)

# EUROPÄISCHE PATENTSCHRIFT

(45) Veröffentlichungstag der Patentschrift:
06.08.86

(51) Int. Cl.⁴: **G 01 P 5/07**

(21) Anmeldenummer: **83103922.7**

(22) Anmeldetag: **21.04.83**

(54) **Geschwindigkeitsmesser für strömende Medien.**

(30) Priorität: **24.05.82  DE 3219393**
**23.02.83  DE 3306343**

(43) Veröffentlichungstag der Anmeldung:
**30.11.83 Patentblatt 83/48**

(45) Bekanntmachung des Hinweises auf die Patenterteilung:
**06.08.86 Patentblatt 86/32**

(84) Benannte Vertragsstaaten:
**AT BE CH DE FR GB IT LI NL SE**

(56) Entgegenhaltungen:
**DE - A - 2 847 277**
**DE - A - 2 922 252**
**DE - A - 3 011 531**
**FR - A - 667 358**
**FR - A - 671 950**
**FR - A - 1 136 186**
**FR - A - 1 522 290**
**FR - A - 2 201 456**

(73) Patentinhaber: **Flasch, Dieter, Baumweg 7,**
**D-8034 Germering (DE)**
Patentinhaber: **Suchy, Manfred, Brombergerweg 5,**
**D-8037 Olching (DE)**

(72) Erfinder: **Flasch, Dieter, Baumweg 7, D-8034 Germering (DE)**
Erfinder: **Suchy, Manfred, Brombergerweg 5,**
**D-8037 Olching (DE)**

(74) Vertreter: **Liesegang, Roland, Dr.-Ing., Sckellstrasse 1,**
**D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Geschwindigkeitsmesser für strömende Medien, insbesondere zur Anwendung an Segelbooten und Surfbrettern, mit den Merkmalen des Oberbegriffs des Anspruchs 1.

Bei einem bekannten Geschwindigkeitsmesser dieser Art (DE-A-3 011 531) ist das an der Unterseite des Bootskörpers eines Segelbootes o.dgl. angebrachte Laufrad frei der Strömung ausgesetzt. Dies kann zu Verschmutzung und bei Auflaufen auf den Grund oder bei Kollision mit Gegenständen im Wasser zur Beschädigung bzw. Zerstörung des Laufrades führen. Problematisch ist diese Anordnung vor allem bei Surfbrettern, die häufig über den Grund geschleift werden. Ferner ist eine Drahtverbindung zwischen dem Laufradteil und der Anzeigevorrichtung erforderlich, die ein Durchbohren des Bodens bedingt.

Es ist auch ein Geschwindigkeitsmesser bekannt (DE-A-28 47 277), bei dessen einer Ausführung das Laufrad auf einer lotrechten Welle ausserhalb eines Gehäuseunterteils angeordnet ist. Von dem Gehäuseunterteil ragt eine die eine Laufradhälfte abschirmende Leitrippe nach unten. Die andere Laufradhälfte ist dem anströmenden Medium frei ausgesetzt, also nicht vor einem Anlaufen am Untergrund noch vor Verschmutzung geschützt. Bei einer anderen Ausführung ist das Laufrad als schräg stehendes Kegelrad ausgebildet, das auf dem schräg abgebogenen Ende einer biegsamen Welle stitzt. In diesem Fall wird das Laufrad zwar teilweise von einem Gehäuseunterteil umfasst; es ragt aber ebenfalls mit einem von der Strömung zu beaufschlagenden Teil über die Gehäusekontur nach unten hinaus und ist somit ebenfalls der Gefahr einer Beschädigung und Verschmutzung ausgesetzt.

Schliesslich ist ein Geschwindigkeitsmesser für Flüssigkeiten zur Anwendung an Wasserfahrzeugen bekannt, bei dem das horizontale Laufrad völlig versenkt in einem als Zylinderschaft ausgebildeten Gehäuse untergebracht ist und über eine Bohrung von der Flüssigkeit beaufschlagt wird (FR-A-671 950). Der den Boden des Wasserfahrzeuges durchsetzende Schaft steht nach unten vor, so dass er ebenfalls einer Verletzungsgefahr bei seichtem Gewässer ausgesetzt ist.

Der Erfindung liegt die Aufgabe zugrunde, einen Geschwindigkeitsmesser der eingangs beschriebenen Art so auszubilden, dass Beschädigungen oder gar Zerstörungen ausgeschlossen, und die Verschmutzungsgefahr vermindert sind, wobei gleichzeitig eine genaue Anzeige und eine einfache Montage sichergestellt und der Boden des Wasserfahrzeuges selbst völlig unversehrt bleiben sollen.

Zur Lösung dieser Aufgabe sind bei einer Einrichtung der genannten Art gemäss der Erfindung die kennzeichnenden Merkmale des Anspruchs 1 vorgesehen.

Das Laufrad ragt also bei der Erfindung überhaupt nicht aus dem Gehäuse vor. Dies eliminiert vollständig die Gefahr eines Bodenkontaktes und die damit einhergehende Beschädigungsgefahr. Überraschend reicht eine Beaufschlagung des im Gehäuse versenkten Laufrades allein durch die Nut im Gehäuse zu einer schon auf sehr kleine Strömungsgeschwindigkeiten reagierenden genauen Messung aus, wobei – ebenfalls überraschend – die Verschmutzungs- bzw. Verstopfungsgefahr durch Fremdteilchen, z.B. Pflanzenteile, in dem Medium deutlich vermindert ist.

Im Gehäuse ist ausser dem Laufrad der Magnetfeldsensor nebst der zugehörigen Verarbeitungsschaltung untergebracht, der die Laufradbewegung in eine elektrische Grösse zum Betätigen des Anzeigemechanismus umformt. Bei den üblichen Geschwindigkeitsmessern geschieht dies beispielsweise mittels eines Tacho-Dynamos oder mit andern bekannten Wandlern, die jedoch sämtlich so energieaufwendig sind, dass eine externe Stromquelle nötig ist. Bei dem erfindungsgemäss verwendeten Magnetfeldsensor ist sichergestellt, dass die Laufraddrehung ausreichende Energie zur Erzeugung und Weiterleitung der Spannungsimpulse liefert, so dass Unabhängigkeit von externer Energieversorgung gewährleistet ist.

Ein solcher an sich bekannter Magnetfeldsensor nutzt den bekannten «Wiegand-Effekt» aus, wonach ein Draht einer ferromagnetischen Legierung nach einer geeigneten physikalischen Behandlung eine innere magnetisch weiche Zone und eine äussere magnetisch harte Zone besitzt. Die beiden Zonen verhalten sich unter Einfluss eines magnetischen Feldes je nach dessen Stärke gleich oder unterschiedlich. Die Polaritätsänderungen lassen sich in Form von Spannungsimpulsen mittels einer in die Nähe gebrachten Spule feststellen (Prospekt der Firma Dr. E. Dürrwächter Doduco KG, Pforzheim, April 1980).

Ein solcher Sensor arbeitet berührungslos, d.h. kurzschlussicher und unter rauhesten Umgebungsbedingungen. Vor allem benötigt er zur Betätigung des digital ausgebildeten Anzeigemechanismus nur vergleichsweise geringe Energie, die durch den «Wiegand-Effekt» selbst bereitgestellt wird oder sich mittels Batterien, insbesondere mittels einer Solarzelle, aufbringen lässt.

Die Anwendung eines berührungslos arbeitenden Sensors, der die Drehzahl eines von einem Strömungsmedium beaufschlagten Laufrades abtastet, ist zur Windenergiebestimmung bekannt (DE-OS 29 35 524).

Der Anbringungsort des Anzeigemechanismus auf der Oberseite eines Surfbrettes liegt vorzugsweise oberhalb des Montageortes des Geschwindigkeitsmessers hinter dem Mastfusspunkt und vor der Schwertöffnung bzw. an dem Schwert des Surfbrettes.

Wenn der Abstand zwischen dem Anzeigemechanismus und dem Gehäuse klein, z.B. ca. 50 cm ist, reicht der Energieinhalt der vom Magnetfeldsensor erzeugten Spannungsimpulse zur Übertragung bzw. Anzeigebetätigung aus. In diesem Fall ist bevorzugt, wenn die Spannungsimpulse die Versorgungsspannung eines ggf. höherfrequenten Schwingkreises bilden, welcher die ggf. frequenzgewandelten Impulse zum Anzeigemechanismus abstrahlt.

Wenn dagegen der Abstand vergrössert oder aus einem anderen Grunde am Empfangsort ein grösserer Energieinhalt gewünscht ist, dienen die Spannungsimpulse zweckmässig als Steuersignale für einen von einer Fremdspannungsquelle versorgten Schwingkreis.

Eine elektrische Schaltung zur Verarbeitung und Abstrahlung der Spannungsimpulse kennzeichnet sich vorzugsweise dadurch, dass der Schwingkreis einen Kondensator und eine dazu parallel geschaltete Schwingspule aufweist, dass ein Transistor die im Schwingkreis erzeugte Schwingung verstärkt, dass ein Widerstand die Transistorspannung erzeugt, und dass ein weiterer Kondensator zum Filtern der höherfrequenten Anteile der Schwingung vorgesehen ist.

Das Laufrad kann in vertikaler Position in das Gehäuse eingebaut sein. Bevorzugt ist jedoch eine Anordnung, bei der das Laufrad mit im wesentlichen senkrecht zum Boden des Surfbrettes verlaufender Drehachse in dem strömungsgünstig gestalteten Gehäuse angeordnet ist und dass die Nut seitlich in dem Gehäuse vorgesehen ist.

Es ist von Vorteil, wenn die Nutbreite geringer als die Laufradbreite ist, derart, dass das Laufrad von den seitlichen Nuträndern beidseitig überlappt wird. Dies beugt einer Verstopfung mit im Wasser treibenden Fremdteilchen, wie Pflanzenfasern, durch Eindringen in die Spalte zwischen dem Laufrad und dem Gestänge vor. Diesem Zweck dient auch eine Ausgestaltung des Laufrades, bei der am aus Kunststoff gefertigten Laufrad Lagerspitzen angeformt sind, mit denen es in Lageraufnahmen am Gehäuse unterstützt ist, und ferner ein nach unten ragender Dichtkragen, der ggf. mit einer ringförmigen Ausnehmung im Gehäuse eine berührungsfreie Abdichtung bildet.

Hinsichtlich der Montage ist eine Lösung günstig, wonach das Gehäuse in Gehäuseteile zur Aufnahme des Laufrades und der elektrischen Verarbeitungsschaltung unterteilt und mittels Schnellverschluss lösbar mit einer am Surfbrett befestigten Grundplatte verbunden ist.

Die Erfindung ist im folgenden anhand schematischer Zeichnungen an einem Ausführungsbeispiel mit weiteren Einzelheiten näher erläutert. Es zeigen:

Fig. 1 eine teilweise geschnittene Seitenansicht eines an der Unterseite eines Surfbrettes angebrachten Geschwindigkeitsmessers mit an der Oberseite des Surfbrettes angeordneter Anzeigevorrichtung;

Fig. 2 einen Schnitt des Geschwindigkeitsmessers nach Fig. 1 nach der Linie A–B;

Fig. 3 eine Ansicht des Geschwindigkeitsmessers nach den Fig. 1 und 2 von hinten;

Fig. 4 einen Teilschnitt zur Darstellung eines Laufrades des Geschwindigkeitsmessers nach den Fig. 1 bis 3;

Fig. 5 eine Teildarstellung eines Surfbrettes mit an einem bevorzugten Anbringungsort angebrachten Geschwindigkeitsmesser mit Anzeigevorrichtung gemäss der Erfindung;

Fig. 6 eine perspektivische Ansicht von oben einer digitalen Geschwindigkeitsanzeige;

Fig. 7 eine perspektivische schematische Darstellung des Laufrades des Geschwindigkeitsmessers nach den Fig. 1 bis 4 und einer Spule zur Bildung eines Magnetfeldsensors;

Fig. 8 ein Spannungs-Zeit-Diagramm, in welchem mit dem Magnetfeldsensor nach Fig. 7 erzeugte Spannungsimpulse dargestellt sind;

Fig. 9 ein Blockschaltbild einer Vorrichtung zum drahtlosen Übertragen von mit einem Magnetfeldsensor nach Fig. 7 erzeugten Spannungsimpulsen zu einer Empfangsvorrichtung;

Fig. 10 ein Blockschaltbild einer gegenüber Fig. 9 abgewandelten Vorrichtung gemäss der Erfindung;

Fig. 11 ein Blockschaltbild einer weiter gegenüber Fig. 9 abgewandelten Vorrichtung gemäss der Erfindung und

Fig. 12 ein Schaltbild einer ausgeführten Vorrichtung gemäss Fig. 9.

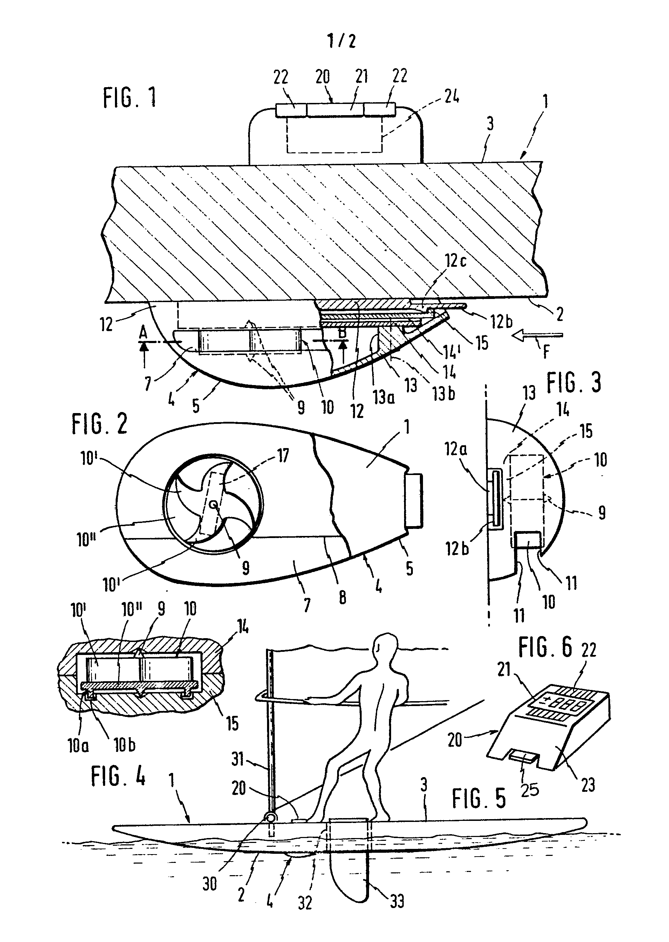

In den Figuren 1 und 5 ist ein Surfbrett insgesamt mit dem Bezugszeichen 1 bezeichnet. Das Surfbrett 1 hat eine Unterseite 2 und eine Oberseite 3. An der Unterseite 2 ist ein insgesamt mit dem Bezugszeichen 4 bezeichneter Geschwindigkeitsmesser angebracht. Der Geschwindigkeitsmesser hat ein strömungsgünstig gestaltetes, mehrteiliges Gehäuse 5 aus einem widerstandsfähigen Kunststoff, dessen äusseres Gehäuseteil 13 mittels T-Führung 12a (Fig. 3) und Schnappverschluss auf einer an der Unterseite 2 angeklebten Platte 12 lösbar gehalten ist. Von der Platte 12 ragt eine federnde Zunge 12b hinten aus einer Öffnung des Gehäuseteils 13 heraus. An der Zunge 12b ist ein keilförmiger Vorsprung 12c angeformt. Dieser Vorsprung rastet in montiertem Zustand hinter eine Ausnehmung in einem Gehäuseteil 15 ein. Durch Niederdrücken der Zunge 12b lässt sich der Schnappverschluss lösen und der Strömungsmesser 1 sich von der Platte 12 in Pfeilrichtung F abschieben.

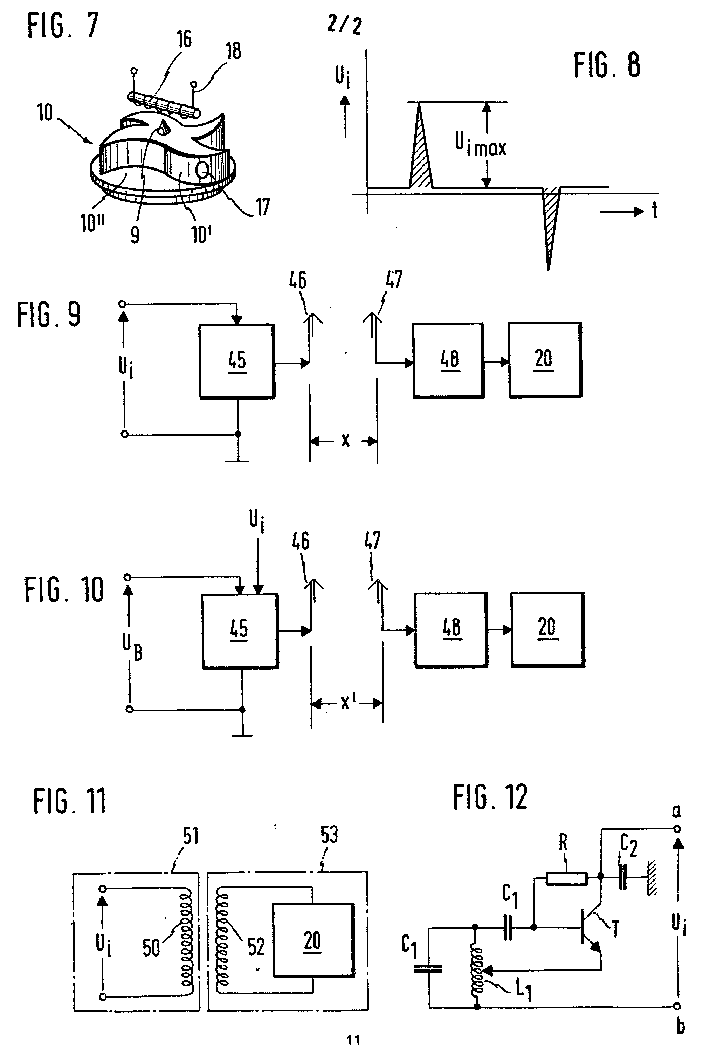

Zwischen dem plattenförmigen Gehäuseteil 15 und einem weiteren plattenförmigen Gehäuseteil 14 ist eine Platine 14' angeordnet, welche die Schaltungsbauteile der in den Fig. 9 und 12 gezeigten elektrischen Schaltung aufnimmt. Die Gehäuseteile 14 und 15 sowie die Platine 14' sind mittels zwei Schrauben 13b an Sockeln 13a des Gehäuseteiles 13 befestigt.

Das äussere Gehäuseteil 13 ist von einer seitlich und in Strömungsrichtung angeordneten Längsnut 7 durchsetzt. Der Grund 8 dieser Längsnut 7 hat einen Abstand von einer Lagerstelle für zwei Spitzenlagerungen 9 eines Laufrades 10 an den Gehäuseteilen 13 und 14. Dieses Laufrad 10 weist vier Flügel 10' auf, welche von einer Grundscheibe 10'' hochragen. Das Laufrad 10 hat etwas grössere Breite als die Nut 7, so dass es beidseitig von den seitlichen Rändern 11 der Nut 7 überlappt wird. Hierdurch, sowie durch die Gestaltung des Laufrades 10 mit der Grundscheibe 10'' und mit einem von deren Unterseite vorspringenden Dichtkragen 10a, der mit einer ringförmigen Nut 10b eine berührungsfreie Dichtung bildet, wird einer Verstopfung und damit einer Blockiergefahr des Laufrades 10 vorgebeugt (Fig. 4). Das Laufrad 10 ist von einem Stabmagneten 17 (Fig. 2, 7) durchsetzt.

Fig. 7 zeigt das Laufrad 10 allein in einer perspektivischen Ansicht. Benachbart dem Laufrad 10 ist ortsfest ein Draht 16 mit magnetisch harter Schale und magnetisch weichem Kern angeordnet, der von einer Spule 18 umwickelt ist. Der so gebildete Magnetfeldsensor setzt die magnetischen Impulse des mit dem Laufrad 10 drehenden Permanentmagneten 17 in der Laufraddrehzahl ihrer Anzahl nach proportionale Spannungsimpulse um. Die Spannungsimpulse werden wie im folgenden anhand der Fig. 8 beschrieben drahtlos einem in einem Gehäuse 23 auf der Oberseite 13 des Surfbrettes angeordneten elektrischen Anzeigemechanismus 20 zugeführt (Fig. 1, 6). Zu dieser Vorrichtung gehört eine digitale Anzeige 21 und eine interne Stromversorgung in Gestalt einer Solarzellenanordnung 22.

Eine elektrische Schaltung 24 (Fig. 1) zum Umsetzen der drahtlos zum Anzeigemechanismus abgestrahlten Spannungsimpulse in Zählimpulse der digitalen Anzeige 21 ist vorzugsweise als IC ausgeführt und ebenfalls in dem Gehäuse 23 des Anzeigemechanismus 20 untergebracht. Selbstverständlich kann auch der gesamte Anzeigemechanismus 20 einschliesslich der elektrischen Schaltung 24 und der Energieversorgung in einer Bohrung im Surfbrett untergebracht sein.

Fig. 5 zeigt den Anbringungsort des Geschwindigkeitsmessers 4 mit Anzeigemechanismus 20 an dem Surfbrett 1 zwischen dem Mastfuss 30 und einer Schwertöffnung 32.

Fig. 6 stellt die digitale Anzeige 21 so dar, wie sie der Benutzer sieht. Die Anzeige ist in gleicher Weise wie der Strömungsmesser mit T-Grundplatte und Schnappverschluss auf der Oberseite des Surfbrettes gehalten. Das der Zunge 12b entsprechende Teil ist hier mit 25 bezeichnet. Die Anzeige 21 selbst ist dreistellig digital mit zwei Stellen vor und einer hinter dem Komma ausgebildet und zur Anzeige der Geschwindigkeit in Knoten geeicht. Die Geschwindigkeit wird bis auf eine Stelle hinter dem Komma mit Messgenauigkeit angezeigt. Diese hohe Genauigkeit macht den Geschwindigkeitsmesser geeignet für ein optimales Trimmen eines damit ausgerüsteten Surfbrettes oder Segelbootes.

Als weiterer Ausbau in diesem Sinne ist die wahlweise zusätzliche Anzeige «±» vor den die Geschwindigkeit in Knoten symbolisierenden Ziffern zu verstehen. «+» zeigt dabei ein Anwachsen und «–» ein Abnehmen der Geschwindigkeit an.

Die empfindlichen Teile des beschriebenen Geschwindigkeitsmessers 4, insbesondere das Laufrad 10, sind mittels einer einfachen Montage so im Gehäuse 5 am Surfbrett 1 lösbar montiert, dass sie von einer Beschädigung insbesondere bei Handhabung an Land oder beim Fahren in seichtem Gewässer sicher geschützt sind.

Eine externe Stromversorgung ist wegen des geringen Stromverbrauchs des Magnetfeldsensors 16, 17, 18 und der Schaltung zur Umformung der Spannungsimpulse in digitale Zählimpulse sowie wegen des zum drahtlosen Übertragen der Spannungssignale $U_i$ ausreichend kleinen Abstandes (entsprechend der Surfbrettstärke) zwischen dem Geschwindigkeitssensor 4 und der Anzeigevorrichtung 20 überflüssig. Der Geschwindigkeitsmesser hat eine hohe Lebensdauer, die jedenfalls für die Lebensdauer des Surfbrettes ausreicht. Er ist vollständig wartungsfrei; bei Verwendung einer Solarzelle als Energiequelle entfällt selbst der Austausch von Batterien.

Im folgenden werden anhand der Fig. 7 bis 12 die drahtlose Übermittlung der vom Sensor 16, 17, 18 erzeugten Spannungsimpulse zum Anzeigemechanismus 20 beschrieben.

Wie oben schon anhand der Fig. 7 erläutert, umfasst der Magnetfeldsensor den Stabmagneten 17 im Laufrad 10 sowie den Draht 16 mit Spule 18. Draht 16 mit Spule 18 sind ortsfest im Gehäuseteil 13 untergebracht. Die von dem beweglichen Permanentmagneten 17 erzeugten magnetischen Impulse werden in Spannungsimpulse $U_i$ umgewandelt, welche an der Spule 18 abgegriffen werden.

Die Form der Spannungsimpulse $U_i$ ist im Spannungs-Zeit-Diagramm gemäss Fig. 8 gezeigt. Die Spannungsimpulse haben sehr steile Flanken, was eine gute Erfassung auch sehr langsamer Bewegungen des Permanentmagneten 17 vorbei an dem Draht 16 garantiert. Der Energieinhalt der Spannungsimpulse wird durch die von ihnen eingeschlossene, in Fig. 8 schraffierte Fläche repräsentiert. Dieser Energieinhalt ist beträchtlich, wenn man berücksichtigt, dass die Spannungsspitzen Werte von 5 V erreichen können.

In den Fig. 9 bis 11 sind drei Ausführungsbeispiele einer Vorrichtung zum Übertragen der Spannungsimpulse zu einer Empfangsvorrichtung mit nachgeschaltetem Anzeigemechanismus dargestellt. Alle diese Ausführungsbeispiele übertragen die Impulssignale drahtlos.

Bei der Ausführung nach Fig. 9 wird der Energieinhalt der Spannungsimpulse $U_i$ dadurch ausgenutzt, dass diese Spannung als Stromversorgung für eine Oszillatorschaltung 45 benutzt wird, welche bei 46 gegebenenfalls frequenzgewandelte Impulssignale abstrahlt. Diese Impulssignale werden bei 47 an einer Empfangsvorrichtung 48 empfangen und dem Anzeigemechanismus 20 zugeführt.

Bei dem Ausführungsbeispiel nach Fig. 10, bei welchem der Einfachheit halber gleiche Bezugszahlen wie bei dem Ausführungsbeispiel nach Fig. 9 verwendet sind, ist unterschiedlich, dass die Oszillatorschaltung 45 durch eine Fremdspannung $U_B$ versorgt wird, welche beispielsweise von einer Batterie geliefert wird. Die von dem Magnetfeldsensor gemäss Fig. 1 erzeugte Impulsspannung $U_i$ dient als Steuersignal für die Oszillatorschaltung 45, derart, dass ein gegenüber Fig. 9 verstärkter Impuls bei 46 abgestrahlt und bei 47 empfangen wird. Dies erlaubt die Vergrösserung des Abstandes x gemäss Fig. 3 zwischen dem Sendeort und dem Empfangsort von einem begrenzten Wert in der Grössenordnung von 50 cm auf einen Wert x′, der je nach Auslegung ein Vielfaches des Wertes x betragen kann.

Bei der Ausführung nach Fig. 11 wird die mit dem Magnetfeldsensor gemäss Fig. 7 erzeugte Impulsfolge $U_i$ durch induktive Koppelung mittels einer Sendespule 50 am Messort 51 zu einer Empfangsspule 52 am Empfangsort 53 übertragen und von dieser Empfangsspule dem Anzeigemechanismus zugeleitet.

Allen drei Ausführungen ist gemeinsam, dass das Ausgangssignal des Magnetfeldsensors 16, 17, 18 drahtlos zu einer Empfangsvorrichtungübertragen und anschliessend dem Anzeigemechanismus 20 zur digitalen Anzeige zugeführt wird.

Fig. 12 zeigt eine ausgeführte Oszillatorschaltung 45, wie sie in den Fig. 9 und 10 nur durch einen Kasten angedeutet ist.

Eine zwischen den Punkten a und b angelegte Versorgungsspannung $U_i$ wird von einem Magnetfeldsensor gemäss Fig. 7 (in Fig. 12 nicht dargestellt) bereitgestellt und regt einen Schwingkreis mit einem Kondensator $C_1$ und einer Schwingspule $L_1$ zu Schwingungen an.

Ein Transistor T verstärkt die entstehende Schwingung der Schwingspule $L_1$, wobei ein Widerstand R die erforderliche Transistorspannung erzeugt. Ferner ist ein Kondensator $C_2$ zum Filtern höherfrequenter Anteile der Schwingkreisspannung in Richtung auf die Versorgungsspannung $U_i$ vorgesehen.

## Patentansprüche

1. Geschwindigkeitsmesser für Flüssigkeiten zur Anwendung an Wasserfahrzeugen, insbesondere an Segelbooten und Surfbrettern, mit einem durch die Strömung beaufschlagten Laufrad (10), das in einem strömungsgünstigen Gehäuse (5) in Gestalt etwa eines halben längsgeschnittenen Eis gelagert und dessen Bewegung dem Anzeigemechanismus (21) einer oberhalb des Bodens (2) des Wasserfahrzeuges (1) angeordneten Anzeigevorrichtung (20) für die Geschwindigkeit der Flüssigkeit mitgeteilt wird, wobei das Gehäuse mit seiner Flachseite am Boden befestigt ist, dadurch gekennzeichnet, dass
— das Laufrad (10) vollständig versenkt in dem Gehäuse (5) untergebracht und von der Flüssigkeit über eine in Strömungsrichtung verlaufende Nut (7) im Gehäuse beaufschlagt ist;
— das Laufrad (10) eine im wesentlichen senkrecht zum Boden (2) des Wasserfahrzeuges (1) verlaufende Drehachse hat;
— ein Bewegungen des Laufrades (10) erfassender Magnetfeldsensor (16, 18) mit einem im Laufrad untergebrachten Magneten (17) durch die Laufraddrehung erzeugte Spannungsimpulse an eine elektrische Schaltung (24) zum Betätigen des Anzeigemechanismus (21) weiterleitet;
— der Magnetfeldsensor (16, 18) und eine elektrische Verarbeitungsschaltung (45; 50, 52) zum Verarbeiten der Spannungsimpulse komplett im Gehäuse (5) untergebracht sind;
— die Anzeigevorrichtung (20) drahtlos mit der Verarbeitungsschaltung (45; 50, 52) in Verbindung steht.

2. Geschwindigkeitsmesser nach Anspruch 1, dadurch gekennzeichnet, dass der Anzeigevorrichtung (20) eine interne Stromquelle, wie eine Batterie oder Solarzelle (22) zugeordnet ist und dass eine digitale Anzeige (21) vorgesehen ist.

3. Geschwindigkeitsmesser nach Anspruch 1 oder 2, dadurch gekennzeichnet, dass die Spannungsimpulse ($U_i$) die Versorgungsspannung eines Schwingkreises ($C_1$, $L_1$) bilden, welcher die Spannungsimpulse zum Anzeigemechanismus (21) abstrahlt.

4. Geschwindigkeitsmesser nach Anspruch 3, dadurch gekennzeichnet, dass die Spannungsimpulse als Steuersignale für einen von einer Fremdspannungsquelle ($U_B$) versorgten Schwingkreis (45) dienen.

5. Geschwindigkeitsmesser nach Anspruch 3 oder 4, dadurch gekennzeichnet, dass der Schwingkreis einen Kondensator ($C_1$) und eine dazu parallel geschaltete Schwingspule ($L_1$) aufweist, dass ein Transistor (T) die im Schwingkreis erzeugte Schwingung verstärkt, dass ein Widerstand (R) die Transistorspannung erzeugt, und dass ein weiterer Kondensator ($C_2$) zum Filtern höherfrequenter Anteile der Schwingung vorgesehen ist.

6. Vorrichtung nach einem der Ansprüche 1 bis 5, dadurch gekennzeichnet, dass die Nut (7) seitlich in dem Gehäuse (4) vorgesehen ist.

7. Geschwindigkeitsmesser nach einem der Ansprüche 1 bis 6, dadurch gekennzeichnet, dass die Nutbreite geringer als die Laufradbreite ist, derart, dass das Laufrad (10) von den seitlichen Nuträndern (11) beidseitig überlappt wird.

8. Geschwindigkeitsmesser nach Anspruch 6 oder 7, dadurch gekennzeichnet, dass am aus Kunststoff gefertigten Laufrad (10) Lagerspitzen (9) angeformt sind, mit denen es in Lageraufnahmen am Gehäuse (5) unterstützt ist, und ferner ein nach unten ragender Dichtkragen (10a), der ggf. mit einer ringförmigen Ausnehmung (10b) im Gehäuse eine berührungsfreie Abdichtung bildet.

9. Geschwindigkeitsmesser nach einem der Ansprüche 6 bis 8 , dadurch gekennzeichnet, dass das Gehäuse (5) in Gehäuseteile (14, 15) zur Aufnahme des Laufrades (10) und der elektrischen Verarbeitungsschaltung (45; 50, 52) unterteilt und mittels Schnappverschluss (12b, c) lösbar mit einer am Wasserfahrzeug (1) befestigten Grundplatte (12) verbunden ist.

10. Geschwindigkeitsmesser nach einem der Ansprüche 1 bis 9, dadurch gekennzeichnet, dass die Anzeigevorrichtung (20) mittels Schnappverschluss (25) lösbar mit einer am Wasserfahrzeug (1) befestigten Grundplatte verbunden ist.

## Revendications

1. Dispositif de mesure de vitesse pour fluides, destiné à être utilisé sur des véhicules circulant dans l'eau, en particulier sur des voiliers et aquaplanes, comprenant une roue mobile (10) actionnée par le fluide en écoulement et logée dans un boîtier (5) favorable à l'écoulement ayant approximative la forme d'un demi-œuf en coupe longitudinale et dont le mouvement est transmis au mécanisme d'indication (21) d'un dispositif indicateur (20) de la vitesse du fluide disposé au-dessus du fond (2) du véhicule (1), ledit boîtier étant fixé sur ledit fond avec sa paroi plane, caractérisé en ce que

— la roue mobile (10) est disposée de manière complètement noyée dans le boîtier (5) en étant frappée par le fluide à travers une rainure (7) passant en direction de l'écoulement dans le boîtier;

— la roue mobile (10) présente un axe de rotation arrangé sensiblement verticalement par rapport au fond (2) du véhicule (1);

— un détecteur de champ magnétique (16, 18) détectant des mouvements de la roue mobile (10), en coopération avec un aimant (17) disposé dans la roue mobile, transmet des impulsions de tension produits par la rotation de la roue mobile à un circuit électrique (24) pour actionner le mécanisme d'indication (21);

— le détecteur de champ magnétique (16, 18) et un circuit électrique de traitement (45; 50, 52) destiné au traitement des impulsions de tension sont complètement disposés dans le boîtier (5);

— le dispositif indicateur (20) est en communication sans fil avec le circuit de traitement (45; 50, 52).

2. Dispositif de mesure de vitesse selon la revendication 1, caractérisé en ce qu'une source de courant interne, comme une batterie ou une cellule solaire (22) est attribuée au dispositif indicateur (20) et en ce qu'une indication digitale (21) est prévue.

3. Dispositif de mesure de vitesse selon la revendication 1 ou 2, caractérisé en ce que les impulsions de tension $(U_i)$ forment la tension d'alimentation d'un circuit oscillant $(C_1, L_1)$, lequel ément les impulsions de tension au mécanisme d'indication (21).

4. Dispositif de mesure de vitesse selon la revendication 3, caractérisé en ce que les impulsions de tension servent de signaux de commande pour un circuit oscillant (45) alimenté par une source de tension étrangère $(U_B)$.

5. Dispositif de mesure de vitesse selon la revendication 3 ou 4, caractérisé en ce que le circuit oscillant comprend un condensateur $(C_1)$ et en parallèle avec de dernier une self oscillatrice $(L_1)$, qu'un transistor (T) amplifie l'oscillation produite dans le circuit oscillateur, que la tension du transistor est produit par une résistance (R) et en ce qu'un second condensateur $(C_2)$ est prévu pour filtrer les parties à relativement haute fréquence de l'oscillation.

6. Dispositif selon l'une des revendications 1 à 5, caractérisé en ce que ladite rainure (7) est prévue latéralement dans le boîtier (4).

7. Dispositif de mesure de vitesse selon l'une des revendications 1 à 6, caractérisé en ce que la largeur de la rainure est inférieure à la largeur de la roue mobile, de manière à ce que la roue mobile (10) soit enchevauchée des deux côtés par les bords latéraux (11) de la rainure.

8. Dispositif de mesure de vitesse selon la revendication 6 ou 7, caractérisé en ce que des pointes de pivot (9) sont formées sur la roue mobile (10) fait en plastique servant à son appui dans des supports prévus dans le boîtier (5) ainsi qu'un collet d'étanchéité (10a) en saillie vers le bas formant, éventuellement en coopération avec une rainure circulaire (10b) dans le boîtier, une étanchéification sans contact.

9. Dispositif de mesure de vitesse selon l'une des revendications 6 à 8, caractérisé en ce que le boîtier (5) est subdivisé en des parties de boîtier (14, 15) destinées au logement de la roue mobile (10) et du circuit électrique de traitement (45; 50, 52) et en ce qu'il est fixé amoviblement au moyen d'un assemblage à déclic (12b, e) sur une plaque de montage (12) fixée au véhicule (1).

10. Dispositif de mesure de vitesse selon l'une des revendications 1 à 9, caractérisé en ce que le dispositif indicateur (20) est fixé amoviblement au moyen d'un assemblage à déclic sur une plaque de montage fixée au véhicule (1).

**Claims**

1. Speed measuring apparatus for fluids for use on water vehicles, particularly on sailing boats and surf boards, having an impeller (10) which is acted on by the flow and which is mounted in a streamlined housing (5) substantially of the shape of a half longitudinally sectioned egg and whose movement is transmitted to the indicator mechanism (21) of a display device (20) for the speed of the fluid disposed above the bottom (2) of the water vehicle (1), the flat side of the housing being secured to the bottom, characterised in that

— the impeller (10) is housed fully sunk in the housing (5) and acted on by the fluid via a groove (7) in the housing extending in the direction of flow;

— the impeller (10) has an axis of rotation extending substantially perpendicular to the bottom (2) of the water vehicle (1);

— a magnetic field sensor (16, 18) detecting movements of the impeller (10) and having a magnet (17) accommodated in the impeller transmits voltage pulses produced by the rotation of the impeller to an electrical circuit (24) for actuation of the indicator mechanism (21);

— the magnetic field sensor (16, 18) and an electrical processing circuit (45; 50, 52) for processing the voltage pulses are completely housed within the housing (5);

— the display device (20) is in radio connection with the processing circuit (45; 50, 52).

2. Speed measuring apparatus as claimed in claim 1, characterised in that an internal power source, such as a battery or solar cell (22), is associated with the display device (20) and that a digital indicator (21) is provided.

3. Speed measuring apparatus as claimed in claim 1 or 2, characterised in that the voltage pulses $(U_i)$ constitute the supply voltage of a resonant circuit $(C_1, L_1)$ which emits the voltage pulses to the indicator mechanism.

4. Speed measuring apparatus as claimed in claim 3; characterised in that the voltage impulses serve as control signals for a resonant circuit (45) supplied by an external voltage source (U$_B$).

5. Speed measuring apparatus as claimed in claim 3 or 4, characterised in that the resonant circuit has a capacitor (C$_1$) and an inductor (L$_1$) connected in parallel thereto, that a transistor (T) amplifies the oscillation produced in the resonant circuit, that a resistor (R) produces the transistor voltage and that a further capacitor (C$_2$) is provided to filter the proportions of higher frequency of the oscillation.

6. Apparatus as claimed in one of claims 1 to 5, characterised in that the groove (7) is provided in the side of the housing (4).

7. Speed measuring apparatus as claimed in one of claims 1 to 6, characterised in that the width of the groove is less than the width of the impeller such that the impeller (10) is overlapped at both sides by the lateral edges (11) of the groove.

8. Speed measuring apparatus as claimed in claim 6 or 7, characterised in that pivot points (9) are formed on the impeller which is manufactured from plastics material by which it is supported in bearing receptacles on the housing (5) and also a downwardly extending sealing collar (10a) which optionally with an annular recess (10b) in the housing forms a contact-free seal.

9. Speed measuring apparatus as claimed in one of claims 6 to 8, characterised in that the housing (5) is divided into housing portions (14, 15) to accommodate the impeller (10) and the electrical processing circuit (45; 50, 52) and is releasably connected to a base plate (12) secured to the water vehicle (1) by means of a snap connector (12b, c).

10. Speed measuring apparatus as claimed in one of claims 1 to 9, characterised in that the display device (20) is releasably connected to a base plate secured to the water vehicle (1) by means of a snap connection (25).

FIG. 1

FIG. 2

FIG. 3

FIG. 4

FIG. 5

FIG. 6

FIG. 7

FIG. 8

FIG. 9

FIG. 10

FIG. 11

FIG. 12